# EUROPÄISCHE PATENTSCHRIFT

(11) **EP 0 940 769 B1**
(45) Veröffentlichungstag und Bekanntmachung des Hinweises auf die Patenterteilung: **17.10.2001**
(21) Anmeldenummer: 98103736.9
(22) Anmeldetag: 03.03.1998
(51) Int. Cl.: G06K 19/07

(54) **Datenträger zum kontaktlosen Empfangen von amplitudenmodulierten Signalen**
Data carrier for contacless reception of amplitude modulated signals
Porteur de données pour une réception sans fil de signaux modulés en amplitude

(43) Veröffentlichungstag der Anmeldung: 08.09.1999
(73) Patentinhaber: Infineon Technologies AG, 80506 München (DE)
(72) Erfinder: Reiner, Robert, D-85579 Neubiberg (DE); Schmitt-Landsiedel, Doris, D-85521 Ottobrunn (DE); Guengerich, Volker, Dr., D-80997 München (DE); Schraud, Gerhard, Dr., D-86415 Mering (DE)
(74) Vertreter: Hermann, Uwe, Dipl.-Ing.

(56) Entgegenhaltungen:
- EP-A- 0 525 642
- FR-A- 2 751 148
- GB-A- 2 198 014

## Beschreibung

Die Erfindung betrifft einen Datenträger mit zumindest einer Spule zum kontaktlosen Empfangen von amplitudenmodulierten Signalen, mit einer der Spule nachgeschalteten Gleichrichterschaltung und mit einer Schaltungsanordnung zum Verarbeiten und/oder Speichern der Daten.

Ein solcher Datenträger ist derzeit hauptsächlich in Form einer Chipkarte auf dem Markt und aus der deutschen Anmeldung DE-A-196 34 134 bekannt. Bei dem dort beschriebenen Verfahren zum Übertragen von Daten zwischen einem Terminal und einem tragbaren Datenträger über eine drahtlose elektromagnetische Übertragungsstrecke findet, wie dies bei derzeitigen solchen kontaktlosen Übertragungen allgemein üblich ist, eine 100%-ASK-Modulation des Trägersignals statt. Dieses Ein/Aus-Schalten des Trägersignals ist zwar im Datenträger verhältnismäßig leicht zu demodulieren, hat aber den Nachteil, daß während der Austastlücke kein Taktsignal zur Verfügung steht.

Ferner ist aus FR-A-2 751 148 ein Datenträger bekannt, welcher ein empfangenes amplitudenmoduliertes Signal auf der Basis des Stromes demoduliert, welcher durch einen zum Empfangsschwingkreis parallel geschalteten Regler fließt.

In den Standardisierungsgremien für die kontaktlose Chipkarte (ISO 14443) ist jedoch der augenblickliche Stand, für die Datenübertragung von einem Schreib/Lesegerät zu einer Karte bzw. allgemein einem Datenträger neben dem ON-OFF-Keying (OOK) auch ein Amplitude-Shift-Keying (ASK) mit einem Modulationsgrad von 5 bis 15% zu verwenden.

Eine solche Modulation ist jedoch schwierig zu demodulieren, da sich die Entfernung zwischen Schreib/Lesegerät und Datenträger stark ändern kann und dadurch die Amplitude des empfangenen Signals Schwankungen unterliegt, die sich der Modulation überlagern und diese verfälschen. Außerdem haben die Schaltungen im Datenträger eine stark schwankende Stromaufnahme, die ebenfalls auf die Modulation zurückwirkt. Die angesprochenen Probleme sind besonders kritisch bei passiven Datenträgern, die keine eigene Stromversorgung haben und ihre Betriebsenergie aus dem empfangenen Signal beziehen.

Es ist daher Aufgabe der Erfindung, einen Datenträger anzugeben, bei dem diese Probleme verringert oder gar beseitigt sind.

Die Aufgabe wird durch einen Datenträger gemäß Anspruch 1 gelöst. Vorteilhafte Weiterbildungen sind in den Unteransprüchen angegeben.

Beim erfindungsgemäßen Datenträger ist der Demodulator in Zusammenhang mit dem Stromversorgungskonzept realisiert. Als erste Maßnahme ist der Schaltungsanordnung eine Versorgungsspannungs-Regelschaltung parallel geschaltet. Diese bewirkt eine Entkopplung der Ströme im durch die Schaltungsanordnung gegebenen Lastkreis und im durch die Spule und dem Gleichrichter gegebenen Versorgungskreis. Damit ist der Strom im Versorgungskreis nur abhängig vom Leistungsangebot aus dem von der Spule empfangenen Signal. Mit einer als Amplitudendemodulator fungierenden Strommeßeinrichtung für den Strom im Versorgungskreis wird die Amplitudenmodulation erfaßt.

In einer ersten Ausbildung der Erfindung ist im Versorgungskreis ein Meßwiderstand angeordnet, dessen Anschlüsse mit einer Demodulatorschaltung verbunden sind. Die Demodulatorschaltung wertet somit den Spannungsabfall am Meßwiderstand aus, der ein Maß für die Amplitudenmodulation ist.

Eine zweite Ausbildung der Erfindung sieht eine Stromspiegelschaltung vor, deren Ausgangsstrom gleich oder zumindest proportional dem Strom im Versorgungskreis und damit der Modulation ist. Die Stromspiegelschaltung hat den Vorteil, daß der Spannungsabfall an der Diode bzw. dem Diodentransistor im Versorgungskreis nicht-linear vom Strom abhängt und bei großen Strömen nur mit der Wurzel aus dem Strom wächst und damit die Spannung am Gleichrichter begrenzt. Trotz des gegenüber einem Meßwiderstand geringeren Widerstands der Stromspiegeldiode ist es wünschenswert, den Widerstandswert weiter zu reduzieren. Dies erfolgt in erfindungsgemäßer Weiterbildung durch eine Vorspannung am Gate des Stromspiegel-Diodentransistors, wodurch dieser leitfähiger wird. Die Vorspannung wird vorteilhafterweise so gewählt, daß der Stromspiegel-Diodentransistor gerade noch in Sättigung ist.

Eine erste Ausführungsform für eine Vorspannungserzeugungsschaltung wird mit einem Spannungsteiler, der mit der Versorgungsspannung, vorteilhafterweise mit der geregelten Versorgungsspannung, verbunden ist, realisiert. Der Spannungsteiler kann in vorteilhafter Weiterbildung als Filter ausgebildet sein, um Spannungsschwankungen, die am Parallelregler von einer wechselnden Last verursacht werden, zu unterdrücken.

Eine weitere Ausführungsform ist mit einer weiteren Spannungs-Regelschaltung gebildet. Diese kann in vorteilhafter Weise an die Versorgungsspannungs-Regelschaltung angeschlossen sein, also von dieser versorgt werden, um so eine stabilere Ausgangsspannung zu liefern.

Bei einer dritten Ausbildung der Erfindung ist die Stromspiegelschaltung in die Gleichrichterschaltung integriert. Hierdurch fällt keine weitere Spannung zwischen der Gleichrichterschaltung und der Last ab, da die Stromspiegelschaltung eine bereits in der Gleichrichterschaltung enthaltene Diode mit nutzt. In vorteilhafter Weise werden zwei Stromspiegelschaltungen benutzt, da dann die Pulsfrequenz des Eingangsstroms der einer Stromspiegelschaltung nachzuschaltenden Demodulatorschaltung doppelt so hoch ist, wodurch die Filterung in der Demodulatorschaltung erleichtert wird.

Es kann auch der Spannungsabfall an Gleichrichterdioden selbst detektiert und ausgewertet werden. Hierzu ist in vorteilhafter Weise zumindest ein weiteres Diodenpaar einem zu einer Versorgungsleitung führendem Diodenpaar der Gleichrichterschaltung parallel geschaltet. Der Verbindungspunkt der gegenpolig angeordneten Dioden dieses weiteren Diodenpaars ist mit einem ersten Eingang einer Demodulatorschaltung verbunden. Die durch das korrespondierende Diodenpaar der Gleichrichterschaltung gelieferte Versorgungsspannung wird einem zweiten Eingang der Demodulatorschaltung zugeführt, so daß die Demodulatorschaltung die Differenzspannung auswerten kann. Die Dioden stellen einen nicht-linearen Widerstand dar, dessen Kennlinie bei der Demodulation berücksichtigt werden muß. Diese Erfindungsvariante hat den einen Vorteil, daß keine zusätzlicher Spannungsabfall auftritt und den anderen, daß sich die Erweiterung der Gleichrichterschaltung in der Praxis sehr einfach durchführen läßt.

Eine vorteilhafte Kombination der Versorgungsspannungsregelung im Lastkreis mit der Strommessung im Versorgungskreis wird in einer weiteren Ausführung der Erfindung mit einer Serienregelschaltung, bei der die Spannung am Ausgang der Gleichrichterschaltung geregelt wird, erreicht. Ein im Strompfad zwischen der Gleichrichterschaltung und der Versorgungsspannungs-Regelschaltung angeordneter Transistor wird derart angesteuert, daß sich sein Widerstand abhängig vom Strom im Versorgungskreis derart ändert, daß der Spannungsabfall am Transistor nahezu konstant bleibt. Das Regelsignal für den Transistor ist dann ein Maß für den Strom im Versorgungskreis und damit für die Modulation.

Die Erfindung wird nachfolgend anhand von Ausführungsbeispielen mit Hilfe von Figuren näher erläutert. Dabei zeigen:
- Figur 1: eine Prinzipdarstellung des erfindungsgemäßen Datenträgers,
- Figur 2: eine Prinzipdarstellung eines ersten Ausführungsbeispiels,
- Figur 3: eine Prinzipdarstellung eines zweiten Ausführungsbeispiels der Erfindung,
- Figur 4: eine Weiterbildung des Ausführungsbeispiels gemäß Figur 3,
- Figur 5: eine weitere Weiterbildung der Ausführung gemäß Figur 3,
- Figur 6: eine Prinzipdarstellung einer dritten Ausführung der Erfindung,
- Figur 7: eine Prinzipdarstellung einer vierten Ausführung der Erfindung,
- Figur 8: eine Prinzipdarstellung einer fünften Ausführung der Erfindung, und
- Figur 9: eine detailliertere Darstellung der Regel- und Demodulatorschaltung gemäß Figur 8.

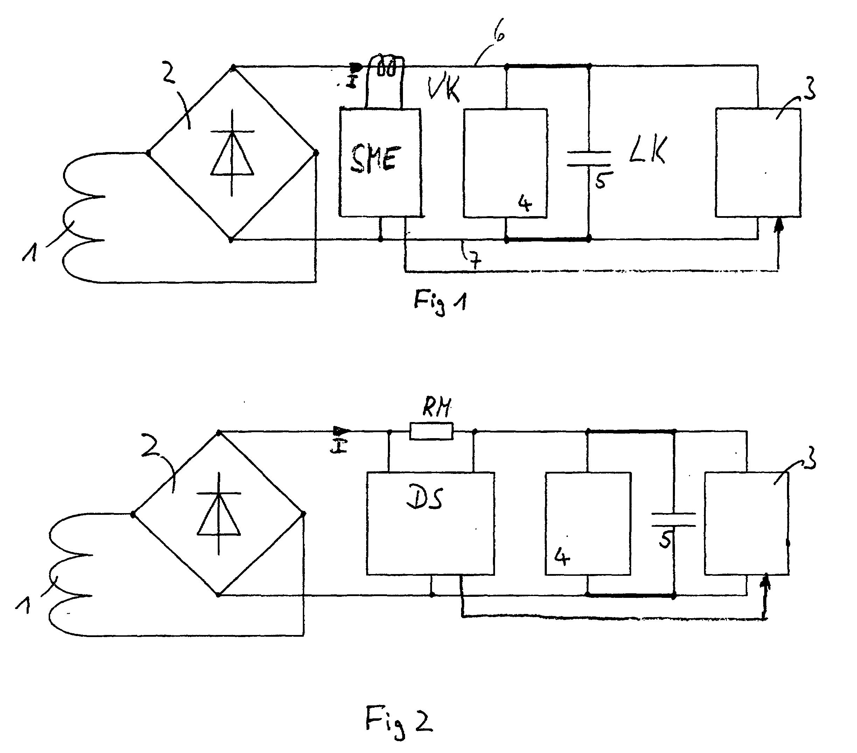

Gemäß Figur 1 ist eine Spule 1 mit einer Gleichrichterschaltung 2 verbunden, die ihrerseits eine Schaltungsanordnung 3 zum Verarbeiten und/oder Speichern von Daten über Leitungen 6, 7 mit einer Versorgungsspannung versorgt.

Der in Figur 1 prinzipiell dargestellte Datenträger soll einerseits über die Spule 1 Energie und Daten von einem Schreib/Lesegerät empfangen können, wobei das von dem Schreib/Lesegerät gesendete Trägersignal amplitudenmoduliert ist. Andererseits ist es auch möglich, Daten vom Datenträger zum Schreib/Lesegerät zu senden, wobei hierzu beispielsweise und derzeit üblich eine Belastungsmodulation an der Spule 1 durchgeführt wird. Da Einzelheiten hierzu für die vorliegende Erfindung ohne Bedeutung sind, sind die hierfür nötigen Schaltungsteile in den Figuren nicht dargestellt und werden im folgenden auch nicht weiter ausgeführt.

Die Schaltungsanordnung 3 zum Verarbeiten und Speichern von Daten weist in erster Linie einen vorzugsweise nichtflüchtigen Datenspeicher auf. Sie umfaßt aber auch Logikschaltungen zum Verarbeiten und Aufbereiten der Daten, insbesondere um als Reaktion auf die empfangenen Daten die vorgesehene Aufgabe auszuführen. In einer besonders hoch entwikkelten Ausführung eines solchen Datenträgers umfaßt die Schaltungsanordnung 3 einen kompletten Microcomputer.

Die beschriebene Schaltungsanordnung 3 benötigt einerseits eine möglichst konstante Versorgungsspannung, wird aber je nach zu lösender Aufgabe eine schwankende Leistungs- bzw. Stromaufnahme haben. Das Schreib/Lesegerät wird zwar ein Signal mit konstanter Signalleistung zum Datenträger senden, das dort empfangene Signal wird aber abhängig vom Abstand des Datenträgers zum Schreib/Lesegerät eine schwankende Amplitude aufweisen. Diese beiden Effekte überlagern sich der Amplitudenmodulation des Trägersignals und können somit die zu empfangenden Daten verfälschen.

In erfindungsgemäßer Weise wird das Problem der Demodulation des amplitudenmodulierten Signals in Zusammenhang mit dem Stromversorgungskonzept insbesondere der Versorgungsspannungsstabilisierung gelöst.

Als erste Maßnahme ist der Schaltungsanordnung 3 eine Versorgungsspannungs-Regelschaltung 4 parallelgeschaltet. Dieser Parallelregler 4 leitet den höheren Strom, der von der Spule 1 und der Gleichrichterschaltung 2 im Falle der vollen Amplitude, also beispielsweise beim Senden einer logischen "1" geliefert wird, ab. Die Spannung an der Schaltungsanordnung 3 bleibt davon unberührt. Durch die Versorgungsspannungsregelschaltung 4 erfolgt also eine Entkopplung des durch die Versorgungsspannungs-Regelschaltung 4 und die Schaltungsanordnung 3 definierten Lastkreises LK und des durch die Spule 1 und die Gleichrichterschaltung 2 sowie die Versorgungsspannungs-Regelschaltung 4 definierten Versorgungskreis VK. Der Strom I durch den Versorgungskreis VK ist dabei ein Maß für die Amplitudenmodulation. Der Versorgungsspannungs-Regelschaltung 4 ist ein Ladekondensator 5 parallelgeschaltet, der als Energiespeicher für die Schaltungsanordnung 3 dient.

Alle bisher genannten Schaltungsteile können als integrierte Schaltung auf einem Halbleiterchip realisiert werden. Es ist dabei möglich, die Verbindungspunkte des Ladekondensators 5 mit den Versorgungsleitungen 6, 7 nach außen zu führen, so daß an den Halbleiterchip ein externer Kondensator zur Vergrößerung der Ladekapazität angeschlossen werden kann.

Als zweite erfindungsgemäße Maßnahme wird der Strom I durch eine als Amplitudendemodulator fungierende Strommeßeinrichtung SME detektiert, das detektierte Signal demoduliert und das so erhaltene Datensignal an die Schaltungsanordnung 3 geliefert.

Als erste Möglichkeit einer Strommeßeinrichtung zeigt Figur 2 einen Meßwiderstand RM, der im Strompfad des Versorgungskreises VK angeordnet ist, und dessen Klemmen mit einer Demodulatorschaltung DS verbunden sind. Der Spannungsabfall am Meßwiderstand RM ist ein Maß für den Strom I durch den Versorgungskreis VK und damit ein Maß für die Modulation des Trägersignals.

Der Meßwiderstand RM ist zwar einfach zu realisieren, der durch ihn verursachte Spannungsabfall ist jedoch störend, da hierdurch die Reichweite des Datenträgers eingeschränkt wird. In einer anderen Ausführung der Erfindung ist die Strommeßeinrichtung mit einem Stromspiegel SP realisiert. Dies zeigt Figur 3. Der als Diode geschaltete Transistor T1 der Stromspiegelschaltung SP ist im Strompfad des Versorgungskreises VK angeordnet, während der Transistor T2 an seinem Drainanschluß den zu demodulierenden Strom, welcher proportional zum Strom im Versorgungskreis VK ist, an die Demodulatorschaltung DS liefert. Eine solche Stromspiegelschaltung SP hat den Vorteil, daß der Spannungsabfall an der Transistordiode T1 gering ist und dieser Transistor T1 rückwirkungsfrei ist, da er in Sättigung arbeitet.

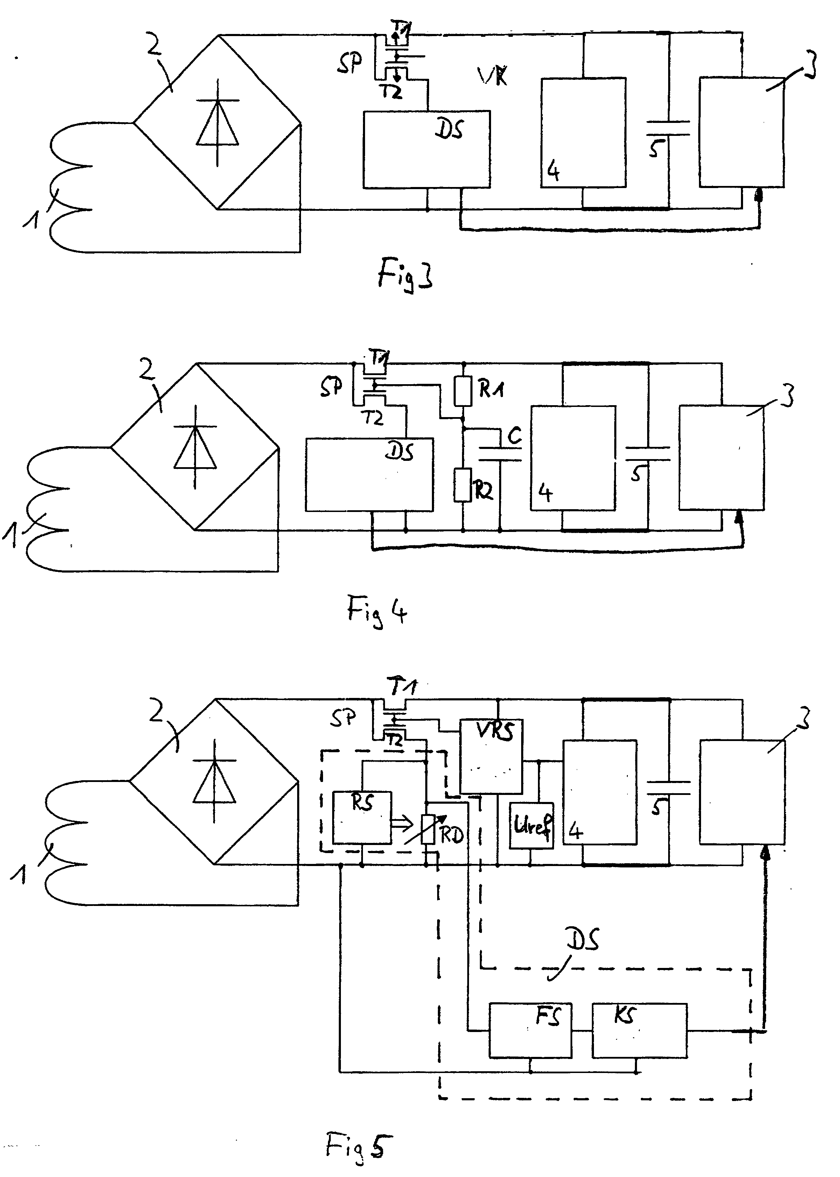

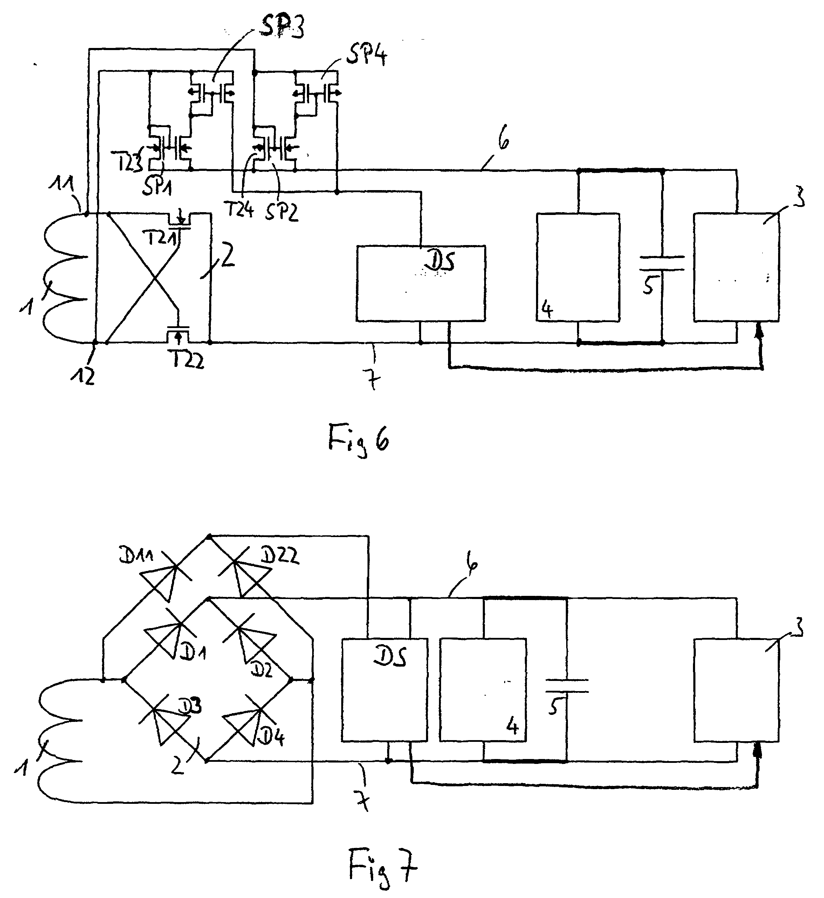

Eine weitere Verringerung des Spannungsabfalls im Versorgungskreis VK wird gemäß den Figuren 4 und 5 durch die Beaufschlagung des Gates des im Versorgungskreis VK angeordneten Stromspiegeltransistors T1 mit einer Vorspannung erreicht. Eine Vorspannungserzeugungsschaltung kann mit einem aus Widerständen R1, R2 gebildeten Spannungsteiler realisiert sein. In vorteilhafter Weiterbildung ist die Vorspannungserzeugungsschaltung mit einem Kondensator C zu einem Filter ergänzt, um Spannungsschwankungen am Parallelregler 4 aufgrund von Lastschwankungen zu unterdrücken.

Gemäß Figur 5 kann zur weiteren Stabilisierung der Vorspannung die Vorspannungserzeugungsschaltung auch mit einer weiteren Spannungsregelschaltung VRS gebildet sein. Diese kann mit derselben Referenzsspannung Uref wie die Versorgungsspannungs-Regelschaltung 4 beaufschlagt sein. Die Referenzspannung Uref wird aus der geregelten Versorgungsspannung abgeleitet.

In Figur 5 ist eine mögliche Ausführung für eine Demodulatorschaltung DS etwas detaillierter dargestellt. Der Strom von dem Stromspiegeltransistor T2 wird über einen steuerbaren Widerstand RD geführt. Der Spannungsabfall an diesem Widerstand RD wird einer Filterschaltung FS zum Herausfiltern des Gleichanteils und danach einer Komparatorschaltung KS zugeführt, die die logischen Pegel detektiert. Eine Demodulator-Regelschaltung RS steuert den Widerstand RD derart, daß sich bei langsamen Stromschwankungen, wie sie sich zum Beispiel durch die mechanische Bewegung des Datenträgers im elektromagnetischen Feld eines Schreib/Lesegeräts ergeben, ein konstanter Spannungsabfall ergibt. Die Demodulator-Regelschaltung RS ist dabei dem Widerstand RD, der durch einen im Widerstandsbereich arbeitenden MOS-Transistor gebildet sein kann, parallelgeschaltet.

Die Gleichrichterschaltung 2 ist mit Dioden gebildet. In integrierten Halbleiterschaltungen sind diese Dioden meist mit als Dioden geschalteten Transistoren T21,...T24 gebildet. Um einen weiteren Spannungsabfall im Versorgungskreis VK zu vermeiden, können diese Transistordioden zu Stromspiegeln ergänzt werden und der Spiegelstrom einer Demodulatorschaltung zugeführt werden. In Figur 6 wurden die zur positiven Versorgungsspannungsleitung 6 führenden Transistordioden T23, T24 der Gleichrichterschaltung 2 zu Stromspiegeln SP1, SP2 ergänzt. Zur Richtungsumkehr sind den Stromspiegeln SP1, SP2 je ein weiterer Stromspiegel SP2, SP4 nachgeschaltet. Die in der Gleichrichterschaltung 2 liegenden Stromspiegelschaltungen SP1, SP2 sind im dargestellten Beispiel mit n-Kanal-MOS-Transistoren und die nachgeschalteten Stromspiegelschaltung SP3, SP4 mit p-Kanal-MOS-Transistoren gebildet.

Bei der Ausführungsform der Erfindung gemäß Figur 7 werden die Dioden D1...D4 des Gleichrichters 2 als Widerstände genutzt, und der Spannungsabfall an ihnen als Information über die Stromstärke einer Demodulatorschaltung zugeführt. Die in Figur 7 gezeigte vorteilhafte Ausbildung dieser Ausführungsform umfaßt außerdem einen Gleichrichterreferenzzweig mit weiteren Dioden D11, D22, die den zur positiven Versorgungsspannungsleitung 6 führenden Dioden D1, D2 parallelgeschaltet sind. Deren Verbindungspunkt ist jedoch mit der Demodulatorschaltung DS verbunden, so daß diese die Differenzspannung auswerten kann.

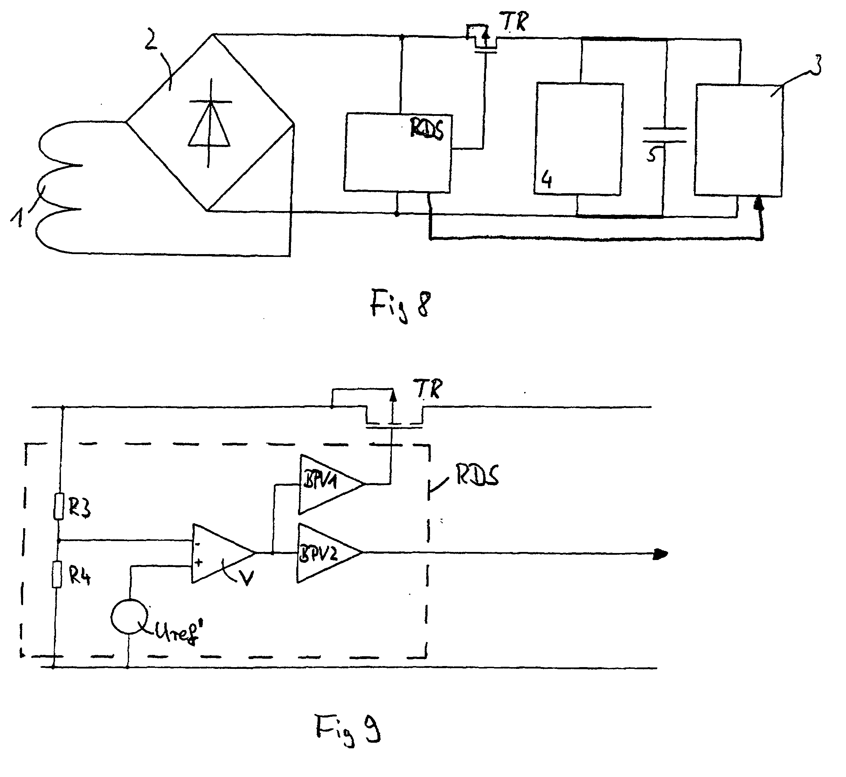

Eine weitere Möglichkeit zur Detektion des im Versorgungskreis VK fließenden Stroms ist in Figur 8 gezeigt. Dort ist im Versorgungskreis VK ein Regeltransistor TR angeordnet, der von einer Regel- und Demodulatorschaltung RDS angesteuert wird. Die Regel- und Demodulatorschaltung RDS ist direkt mit den Ausgangsklemmen der Gleichrichterschaltung 2 verbunden, so daß mit dem durch den Regeltransistor TR und die Regel- und Demodulatorschaltung RDS gebildeten Serienregler die Eingangsspannung konstant gehalten wird. Dies geschieht durch Ansteuerung des Regeltransistors TR derart, daß sich dessen Durchgangswiderstand abhängig vom Strom so ändert, daß der Spannungsabfall am Regeltransistor TR konstant bleibt. Das Steuersignal für den Regeltransistor TR ist dann ein Maß für den Strom im Versorgungskreis VK und kann entsprechend ausgewertet werden.

Eine mögliche Schaltung hierfür zeigt Figur 9. Die von einem Spannungsteiler aus Widerständen R3, R4, die mit den Ausgangsklemmen der Gleichrichterschaltung 2 verbunden sind, abgeleitete Eingangsspannung wird mittelts einem Vergleicher V mit einer Referenzspannung Uref' verglichen und das Differenzsignal über einen ersten Bandpaßverstärker BPV1 dem Gate des Regeltransistors TR zugeführt. Das Ausgangssignal des Vergleichers V wird außerdem über einen zweiten Bandpaßverstärker BPV2 geführt, der an seinem Ausgang das der Modulation entsprechendende Signal zur Verfügung stellt. Prinzipiell kann auf die Bandpaßverstärker BPV1, BPV2 auch verzichtet werden, wenn der Vergleicher V selbst eine geeignete Filtercharakteristik aufweist und der Eingang der Schaltungsanordnung 3, dem das demodulierte Signal zugeführt wird, rückwirkungsfrei ist, so daß die Regelung des Regeltransistors TR nicht beeinflußt wird.

Zum Schutz der integrierten Schaltungen im kontaktlosen Betrieb, können auf dem Halbleiterchip außerdem Spannungsbegrenzungsschaltungen vorgesehen sein. So kann sowohl vor dem Gleichrichter eine Wechselspannungsbegrenzungsschaltung als auch nach dem Gleichrichter eine Gleichspannungsbegrenzungsschaltung angeordnet werden.

Der erfindungsgemäße Datenträger wurde bisher als rein kontaktlos arbeitend dargestellt. Es ist jedoch ohne weiteres möglich, ihn auch als kombinierten Datenträger bzw. Dual-Interface-Datenträger auszubilden, das heißt neben der Empfangs- und Sendespule 1 auch Kontaktflächen vorzusehen, um einen kontaktbehafteten Betrieb zu erlauben. Im kontaktbehafteten Betrieb kann es nötig sein, den Parallelregler 4 abzuschalten, damit kein zu hoher Querstrom fließt, wenn von den Kontakten eine höhere Spannung geliefert wird, als der Parallelregler einstellen möchte. Zur entsprechenden Ansteuerung des Parallelreglers 4 ist dann eine weitere Schaltung nötig, die erkennt, ob der Datenträger im kontaktlosen oder kontaktbehafteten Betrieb arbeitet. Eine solche Schaltung kann dann beispielsweise das Vorhandensein einer Versorgungsspannung an den Kontakten und/oder an der der Spule nachgeschalteten Gleichrichterschaltung und/oder das Vorhandensein eines hochfrequenten Trägersignals an der Spule und/oder das Vorhandensein eines Taktsignals an den Kontakten detektieren und auswerten.

## Patentansprüche

1. Datenträger
- mit zumindest einer Spule (1) zum kontaktlosen Empfangen von amplitudenmodulierten Signalen,
- mit einer der Spule (1) nachgeschalteten Gleichrichterschaltung (2) und
- mit einer Schaltungsanordnung (3) zum Verarbeiten und/oder Speichern von Daten,
**dadurch gekennzeichnet,**
- **daß** der Schaltungsanordnung (3) eine Versorgungsspannungs-Regelschaltung (4) parallelgeschaltet ist und
- **daß** eine als Amplitudendemodulator fungierende Strommeßeinrichtung (SME; RM, DS; SP, DS; TR, DS; D11, D22, DS; SP1, SP2, DS) zwischen der Spule (1) und der Anordnung aus der Versorgungsspannungs-Regelschaltung (4) und der Schaltungsanordnung (3) zum Verarbeiten und/oder Speichern von Daten angeordnet ist.

2. Datenträger nach Anspruch 1, **dadurch gekennzeichnet, daß** die Strommeßeinrichtung mit einem Widerstand (RM) gebildet ist.

3. Datenträger nach Anspruch 1, **dadurch gekennzeichnet, daß** die Strommeßeinrichtung mit einer im Strompfad zwischen der Gleichrichterschaltung (2) und der Versorgungsspannungs-Regelschaltung (4) angeordneten Stromspiegelschaltung (SP) gebildet ist.

4. Datenträger nach Anspruch 3, **dadurch gekennzeichnet, daß** der Steueranschluß des Diodentransistors (T1) der Stromspiegelschaltung (SP) mit dem Ausgang einer Vorspannungserzeugungsschaltung (R1, R2; VRS) verbunden ist.

5. Datenträger nach Anspruch 4, **dadurch gekennzeichnet, daß** die Vorspannungserzeugungsschaltung mit einem Spannungsteiler (R1, R2) gebildet ist.

6. Datenträger nach Anspruch 4 oder 5, **dadurch gekennzeichnet, daß** die Vorspannungserzeugungsschaltung als Tiefpaßfilter (R1, R2, C) ausgebildet ist.

7. Datenträger nach Anspruch 4, **dadurch gekennzeichnet, daß** die Vorspannungserzeugungsschaltung mit einer weiteren Spannungsregelschaltung (VRS) gebildet ist.

8. Datenträger nach Anspruch 1, **dadurch gekennzeichnet, daß** die Strommeßeinrichtung mit zumindest einer Stromspiegelschaltung (SP1, SP2) gebildet ist, deren Diodentransistor(en) (T23, T24) auch als Diodentransistor(en) der Gleichrichterschaltung (2) fungieren.

9. Datenträger nach Anspruch 1, **dadurch gekennzeichnet, daß** die Strommeßeinrichtung mit zumindest einem zu einer jeweiligen Versorgungsleitung führenden Diodenpaar (D1, D2) der Gleichrichterschaltung (2) parallelgeschalteten weiteren, in gleicher Weise gepolten Diodenpaar (D11, D22) gebildet ist, dessen die Dioden verbindender Anschluß den Ausgang der Strommeßeinrichtung bildet.

10. Datenträger nach Anspruch 1, **dadurch gekennzeichnet, daß** die Strommeßeinrichtung mit einer im Strompfad zwischen der Gleichrichterschaltung (2) und der Versorgungsspannungs-Regelschaltung (4) angeordneten, als Serienregler ausgebildeten Eingangsspannungs-Regelschaltung (TR, RDS) gebildet ist, wobei das dem zu messenden Strom proportionale Stellsignal für den Regeltransistor (TR) des Serienreglers (TR, RDS) ausgewertet wird.

11. Datenträger nach einem der vorhergehenden Ansprüche, **dadurch gekennzeichnet, daß** die Strommeßeinrichung mit einer Demodulatorschaltung (DS) gebildet ist.

12. Datenträger nach Anspruch 11, **dadurch gekennzeichnet, daß** die Demodulatorschaltung (DS) mit einem den Strom in eine Spannung abbildenden steuerbaren Widerstand (RD) und einer den Widerstand (RD) ansteuernden Demodulator-Regelschaltung RS) gebildet ist

## Claims

1. Data medium
- having at least one coil (1) for contactlessly receiving amplitude-modulated signals,
- having a rectifier circuit (2) connected downstream of the coil (1), and
- having a circuit arrangement (3) for processing and/or storing data,
**characterized**
- **in that** the circuit arrangement (3) has a supply voltage regulating circuit (4) connected in parallel with it, and
- **in that** a current measuring device (SME; RM, DS; SP, DS; TR, DS; D11, D22, DS; SP1, SP2, DS) acting as an amplitude demodulator is arranged between the coil (1) and the arrangement comprising the supply voltage regulating circuit (4) and the circuit arrangement (3) for processing and/or storing data.

2. Data medium according to Claim 1, **characterized in that** the current measuring device is formed using a resistor (RM).

3. Data medium according to Claim 1, **characterized in that** the current measuring device is formed using a current mirror circuit (SP) arranged in the current path between the rectifier circuit (2) and the supply voltage regulating circuit (4).

4. Data medium according to Claim 3, **characterized in that** the control connection of the diode transistor (T1) in the current mirror circuit (SP) is connected to the output of a bias voltage generating circuit (R1, R2; VRS).

5. Data medium according to Claim 4, **characterized in that** the bias voltage generating circuit is formed using a voltage divider (R1, R2).

6. Data medium according to Claim 4 or 5, **characterized in that** the bias voltage generating circuit is in the form of a low-pass filter (R1, R2, C).

7. Data medium according to Claim 4, **characterized in that** the bias voltage generating circuit is formed using a further voltage regulating circuit (VRS).

8. Data medium according to Claim 1, **characterized in that** the current measuring device is formed using at least one current mirror circuit (SP1, SP2) whose diode transistor(s) (T23, T24) also act as diode transistor(s) of the rectifier circuit (2).

9. Data medium according to Claim 1, **characterized in that** the current measuring device is formed using at least [lacuna] further diode pair (D11, D22), which is connected in parallel with a diode pair (D1, D2) (routed to a respective supply line) of the rectifier circuit (2), has the same polarity and whose connection connecting the diodes forms the output of the current measuring device.

10. Data medium according to Claim 1, **characterized in that** the current measuring device is formed using an input voltage regulating circuit (TR, RDS) which is arranged in the current path between the rectifier circuit (2) and the supply voltage regulating circuit (4) and is in the form of a series regulator, where the actuating signal, which is proportional to the current to be measured, for the regulating transistor (TR) of the series regulator (TR, RDS) is evaluated.

11. Data medium according to one of the preceding claims, **characterized in that** the current measuring device is formed using a demodulator circuit (DS).

12. Data medium according to Claim 11, **characterized in that** the demodulator circuit (DS) is formed using a controllable resistor (RD) which maps the current into a voltage and a demodulator regulating circuit (RS) which drives the resistor (RD).

## Revendications

1. Support de données
- comportant au moins une bobine (1) pour la réception sans contact de signaux modulés en amplitude,
- comportant un circuit (2) redresseur monté en aval de la bobine (1) et
- comportant un montage (3) pour traiter et/ou mémoriser des données,
**caractérisé**
- **en ce qu**'un circuit (4) de régulation de tension d'alimentation est monté en parallèle au montage (3) et
- **en ce qu**'un dispositif (SME ; RM, DS ; SP, DS ; TR, DS ; D11, D22, DS ; SP1, SP2, DS) de mesure de courant fonctionnant comme modulateur d'amplitude est monté entre la bobine (1) et le dispositif constitué du circuit (4) de régulation de tension d'alimentation et du montage (3) pour le traitement et/ou la mémorisation de données.

2. Support de données suivant la revendication 1, **caractérisé en ce que** le dispositif de mesure de courant est formé par une résistance (RM).

3. Support de données suivant la revendication 1, **caractérisé en ce que** le dispositif de mesure de courant est formé par un circuit (SP) de miroir de courant monté dans la voie de courant entre le circuit (2) redresseur et le circuit (4) de régulation de tension d'alimentation.

4. Support de données suivant la revendication 3, **caractérisé en ce que** la borne de commande de commande du transistor (T1) à diode du circuit (SP) de miroir de courant est reliée à la sortie d'un circuit (R1, R2 ; VRS) de production de tension de polarisation.

5. Support de données suivant la revendication 4, **caractérisé en ce que** le circuit de production de tension de polarisation est formé par un diviseur (R1, R2) de tension.

6. Support de données suivant la revendication 4 ou 5, **caractérisé en ce que** le circuit de production de tension de polarisation est réalisé en filtre (R1, R2, C) passe bas.

7. Support de données suivant la revendication 4, **caractérisé en ce que** le circuit de production de tension de polarisation est formé par un circuit (VRS) supplémentaire de régulation de tension.

8. Support de données suivant la revendication 1, **caractérisé en ce que** le dispositif de mesure de courant est formé par au moins un circuit (SP1, SP2) de miroir de courant dont le ou les transistors (T23, T24) à diode servent aussi de transistors à diode du circuit (2) redresseur.

9. Support de données suivant la revendication 1, **caractérisé en ce que** le dispositif de mesure de courant est formé par au moins un couple (D11, D22) de diode supplémentaire qui est branché en parallèle à un couple (D1, D2) de diodes du circuit (2) redresseur allant à une ligne d'alimentation associée, qui est polarisée de la même façon et dont la borne reliant les diodes forme la sortie du dispositif de mesure de courant.

10. Support de données suivant la revendication 1, **caractérisé en ce que** le dispositif de mesure de courant est formé par un circuit (TR, RDS) de régulation de tension d'entrée monté dans la voie de courant entre le circuit (2) redresseur et le circuit (4) de régulation de tension d'alimentation, réalisé en régulateur série, le signal de réglage proportionnel au courant à mesurer étant exploité pour le transistor (TR) de régulation du régulateur (TR, RDS) série.

11. Support de données suivant l'une des revendications précédentes, **caractérisé en ce que** le dispositif de mesure de courant est formé par un circuit (DS) démodulateur.

12. Support de données suivant la revendication 11, **caractérisé en ce que** le circuit (DS) démodulateur est formé par une résistance (RD) pouvant être commandée, représentant le courant dans une tension et par un circuit (RS) de régulation démodulateur commandant la résistance (RD).
